(19)

**Europäisches Patentamt**
**European Patent Office**
**Office européen des brevets**

(11)  **EP 3 515 041 B1**

(12)  # EUROPEAN PATENT SPECIFICATION

(45) Date of publication and mention
of the grant of the patent:
**29.03.2023 Bulletin 2023/13**

(21) Application number: **19151929.7**

(22) Date of filing: **15.01.2019**

(51) International Patent Classification (IPC):
**H04L 9/40** (2022.01)       **G06N 3/04** (2006.01)
**G06N 3/08** (2006.01)

(52) Cooperative Patent Classification (CPC):
**H04L 63/1425; G06N 3/044; G06N 3/045;**
**G06N 3/047; G06N 3/088**

(54) **SYSTEM AND METHOD FOR ABSTRACTING CHARACTERISTICS OF CYBER-PHYSICAL SYSTEMS**

SYSTEM UND VERFAHREN FÜR ABSTRAHIERENDE EIGENSCHAFTEN VON CYBERPHYSIKALISCHEN SYSTEMEN

SYSTÈME ET PROCÉDÉ D'ABSTRACTION DE CARACTÉRISTIQUES DE SYSTÈMES CYBERPHYSIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.01.2018 US 201862619345 P**
**26.06.2018 US 201816018649**

(43) Date of publication of application:
**24.07.2019 Bulletin 2019/30**

(73) Proprietor: **General Electric Company**
**Schenectady, NY 12345 (US)**

(72) Inventors:
• **Yan, Weizhong**
**Niskayuna, NY 12309-1027 (US)**
• **Mestha, Lalit Keshav**
**Niskayuna, NY 12309-1027 (US)**

(74) Representative: **Dennemeyer & Associates S.A.**
**Postfach 70 04 25**
**81304 München (DE)**

(56) References cited:
**US-A1- 2017 167 993**

• **DAEHYUNG PARK ET AL: "A Multimodal Anomaly Detector for Robot-Assisted Feeding Using an LSTM-based Variational Autoencoder", ARXIV.ORG, CORNELL UNIVERSITY LIBRARY, 201 OLIN LIBRARY CORNELL UNIVERSITY ITHACA, NY 14853, 2 November 2017 (2017-11-02), XP080833745,**
• **JINWON AN ET AL: "Variational Autoencoder based Anomaly Detection using Reconstruction Probability", PROGRESS IN BIOMEDICAL OPTICS AND IMAGING, 27 December 2015 (2015-12-27), pages 1-18-6, XP055491966, BELLINGHAM, WA, US ISSN: 1605-7422 ISBN: 978-1-5106-0027-0**
• **YIFAN GUO ET AL: "Multidimensional Time Series Anomaly Detection: A GRU-based Gaussian Mixture Variational Autoencoder Approach", PROCEEDINGS OF MACHINE LEARNING RESEARCH, vol. 95, 14 November 2018 (2018-11-14), pages 97-112, XP055576177,**
• **Weizhong Yan ET AL: "On Accurate and Reliable Anomaly Detection for Gas Turbine Combustors: A Deep Learning Approach", , 31 October 2015 (2015-10-31), XP055578663, Retrieved from the Internet: URL:https://www.phmsociety.org/sites/phmsociety.org/files/phm_submission/2015/phmc_15_025.pdf [retrieved on 2019-04-08]**

**Description**

The present disclosure relates to a platform associated with a cyber-physical system associated with an industrial asset as set forth in the claims.

BACKGROUND

Industrial asset control systems that operate physical systems (*e.g.,* associated with power turbines, jet engines, locomotives, autonomous vehicles, *etc.*) are increasingly connected to the Internet. As a result, these control systems may be vulnerable to threats, such as cyber-attacks (*e.g.,* associated with a computer virus, malicious software, *etc.*), that could disrupt electric power generation and distribution, damage engines, inflict vehicle malfunctions, *etc.* Current methods primarily consider threat detection in Information Technology ("IT," such as, computers that store, retrieve, transmit, manipulate data) and Operation Technology ("OT," such as direct monitoring devices and communication bus interfaces). Cyber-threats can still penetrate through these protection layers and reach the physical "domain" as seen in 2010 with the Stuxnet attack. Such attacks can diminish the performance of an industrial asset and may cause a total shut down or even catastrophic damage to a plant. Currently, Fault Detection Isolation and Accommodation ("FDIA") approaches only analyze sensor data, but a threat might occur even in other types of threat monitoring nodes such as actuators, control logical(s), *etc.* Also note that FDIA is limited only to naturally occurring faults in one sensor at a time. FDIA systems do not address multiple simultaneously occurring faults as they are normally due to malicious intent. Note that quickly detecting an attack may be important when responding to threats in an industrial asset (*e.g.,* to reduce damage, to prevent the attack from spreading to other assets, *etc.*). Making such a detection quickly (*e.g.,* at substantially sample speed), however, can be a difficult task. Cyber-physical systems often have an overwhelmingly large number of physical measurements, which makes attack detection directly based on the physical measurements challenging. It would therefore be desirable to abstract underlying characteristics of a cyber-physical system in an automatic, rapid, and accurate manner.

The following prior art is mentioned:

DAEHYUNG PARK ET AL: "A Multimodal Anomaly Detector for Robot-Assisted Feeding Using an LSTM-based Variational Autoencoder", ARXIV.ORG, CORNELL UNIVERSITY LIBRARY, 201 OLIN LIBRARY CORNELL UNIVERSITY ITHACA, NY 14853, 2 November 2017;
JINWON AN ET AL: "Variational Autoencoder based Anomaly Detection using Reconstruction Probability", PROGRESS IN BIOMEDICAL OPTICS AND IMAGING, 27 December 2015, pages 1-18-6;
YIFAN GUO ET AL: "Multidimensional Time Series Anomaly Detection: A GRU-based Gaussian Mixture Variational Autoencoder Approach", PROCEEDINGS OF MACHINE LEARNING RESEARCH, vol. 95, 14 November 2018, pages 97-112;
Weizhong Yan ET AL: "On Accurate and Reliable Anomaly Detection for Gas Turbine Combustors: A Deep Learning Approach", 31 October 2015.
ELDARDIRY HODA M A ET AL: US 2017/167993 A1 "DEVICE HEALTH ESTIMATION BY COMBINING CONTEXTUAL INFORMATION WITH SENSOR DATA" 15 June 2017

SUMMARY

According to some embodiments, a data source may provide a plurality of time-series measurements that represent normal operation of a cyber-physical system (e.g., in substantially real-time during online operation of the cyber-physical system). A stateful, nonlinear embedding computer may receive the plurality of time-series measurements and execute stateful, nonlinear embedding to project the plurality of time-series measurements to a lower-dimensional latent variable space. In this way, redundant and irrelevant information may be reduced, and temporal and spatial dependence among the measurements may be captured. The output of the stateful, nonlinear embedding may be utilized to automatically identify underlying system characteristics of the cyber-physical system. In some embodiments, a stateful generative adversarial network may be used to achieve stateful embedding. According to some embodiments, an off-line model training platform may train a stateful, nonlinear embedding model prior to a current on-line operation of the cyber-physical asset.

Some embodiments comprise: means for receiving, at a stateful, nonlinear embedding computer from a data source, a plurality of time-series measurements that represent normal operation of a cyber-physical system; means for executing stateful, nonlinear embedding to project the plurality of time-series measurements to a lower-dimensional latent variable space such that redundant and irrelevant information are reduced and temporal and spatial dependence among the measurements are captured; and means for utilizing output of the stateful, nonlinear embedding to automatically identify underlying system characteristics of the cyber-physical system.

EP 3 515 041 B1

Some technical advantages of some embodiments disclosed herein are improved systems and methods to abstract underlying characteristics of a cyber-physical system in an automatic, rapid, and accurate manner.

BRIEF DESCRIPTION OF THE DRAWINGS

FIG. 1 is a high-level block diagram of a system to abstract underlying characteristics of a cyber-physical system in accordance with some embodiments.

FIG. 2 is a method to abstract underlying characteristics of a cyber-physical system according to some embodiments.

FIG. 3 is an overall architecture of a system according to some embodiments.

FIG. 4 illustrates layers of an autoencoder algorithm in accordance with some embodiments.

FIG. 5 is a method of providing stateful embedding according to some embodiments.

FIG. 6 is a system to augment stateless, nonlinear embedding using a window of inputs in accordance with some embodiments.

FIG. 7 is a method of providing stateful embedding using post-processing according to some embodiments.

FIG. 8 is a system to augment stateless, nonlinear embedding using a window of outputs in accordance with some embodiments.

FIG. 9 illustrates a generative adversarial network.

FIG. 10 is a method of providing a stateful generative adversarial network according to some embodiments.

FIG. 11 is a stateful generative adversarial network according to some embodiments.

FIG. 12 is a system to create stateful, nonlinear embedding in accordance with some embodiments.

FIG. 13 is a method to create stateful, nonlinear embedding in accordance with some embodiments.

FIG. 14 is abnormality detection system for an industrial asset in accordance with some embodiments.

FIG. 15 is a block diagram of stateful, nonlinear embedding platform according to some embodiments of the present invention.

FIG. 16 is a tabular portion of an operating mode database in accordance with some embodiments.

FIG. 17 is a display according to some embodiments.

DETAILED DESCRIPTION

In the following detailed description, numerous specific details are set forth in order to provide a thorough understanding of embodiments. However, it will be understood by those of ordinary skill in the art that the embodiments may be practiced without these specific details. In other instances, well-known methods, procedures, components and circuits have not been described in detail so as not to obscure the embodiments.
With the advent of Internet of things ("IoT"), cyber-physical systems have become increasingly complex. The complexity of cyber-physical systems and the heterogeneity of cyber-physical system components pose significant challenges to system health and security. Accurately characterizing a cyber-physical system under normal operation conditions may be a substantial step towards successful development of system health and security. Abstracting characteristics, or simply characterization, of a cyber-physical system is a process of distilling salient information based on a large number of heterogeneous system measurements from the sensors, the actuators, and the control of the cyber-physical system. Since these systems can be highly dynamic (*e.g.,* non-stationary) in nature, the raw system measurements may contain not only strong temporal dependence but also strong spatial dependence among many measurements. Traditional characterization methods, which are generally linear (*e.g.,* Principal Component Analysis ("PCA")) might not be able to adequately capture the underlying system characteristics.

Some embodiments described herein provide a system and method for abstracting underlying system characteristics of cyber-physical systems. Specifically, a system and method may perform abstraction by stateful, nonlinear embedding of real-time system measurements, such as sensors, actuators and control, of the cyber-physical system. Given the fact that such systems have a complex and dynamic nature and system measurements may be noisy, some embodiments may effectively eliminate redundant and irrelevant information from the noisy measurements, while still capturing complex temporal dependence among the measurements (thus preserving the underlying system characteristics). The abstracted characteristics can be further utilized as features or signatures for building effective predictive models, *e.g.,* attack or fault detection, attack localization, and attack neutralization.

Some embodiments introduce a deep leaning-based stateful, nonlinear embedding scheme that enables powerful and effective characterization of cyber-physical systems. Such an approach may leverage information from diverse measurements and be highly scalable to a wide range of cyber-physical systems.

Some embodiments described herein may characterize a cyber-physical system based on the real-time system measurements from sensors, actuators, and control of the physical system. The measurements may be in the form of multivariate time series. Since the system may be highly dynamic (non-stationary) in nature, system measurements used for system characterization may exhibit strong temporal dependence (*i. e.,* the current behavior of the system is dependent on a history of past behavior). Additionally, there exists high dependence among the system measurements (*i.e.,* spatial dependency). Note that effectively and efficiently handling both temporal and spatial dependences during system characterization may be important.

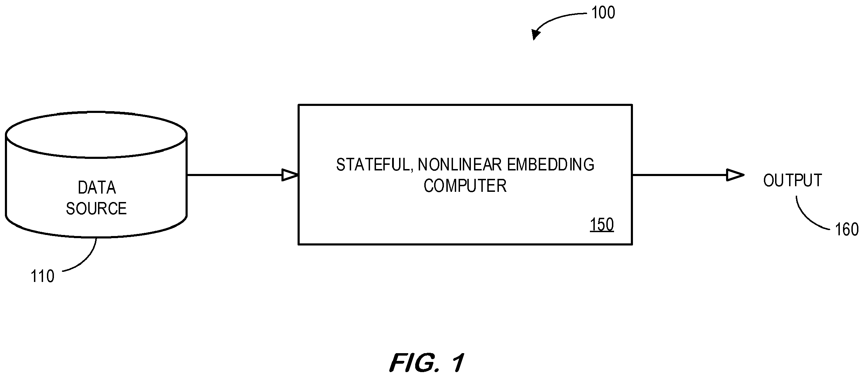

FIG. 1 is a high-level architecture of a system 100 in accordance with some embodiments. The system 100 may include a data source 110 storing a plurality of time-series measurements that represent normal operation of a cyber-physical system. The time-series measurements might be associated with stored historical values associated with the cyber physical system or substantially real-time values (*e.g.,* during online operation of the cyber-physical system) from each of a plurality of "monitoring nodes" (*e.g.,* "$MN_1$," "$MN_2$," ... , "$MN_N$" for "1, 2, ... , N" different monitoring nodes). As used herein, the phrase "monitoring node" might refer to, for example, sensor data, signals sent to actuators, motors, pumps, and auxiliary equipment, intermediary parameters that are not direct sensor signals not the signals sent to auxiliary equipment, and/or control logical(s). These may represent, for example, threat monitoring nodes that receive data from the threat monitoring system in a continuous fashion in the form of continuous signals or streams of data or combinations thereof. Moreover, the nodes may be used to monitor occurrences of cyber-threats or other abnormal events (*e.g.,* sensor faults). This data path may be designated specifically with encryptions or other protection mechanisms so that the information may be secured and cannot be tampered with via cyber-attacks

Information from the data source may be provided to a stateful, nonlinear embedding computer 150 that generates an output 160 (*e.g.* associated with underlying system characteristics of the cyber-physical system). In this way, redundant and irrelevant information may be reduced. Moreover, temporal and spatial dependence among the measurements may be captured.

As used herein, devices, including those associated with the system 100 and any other device described herein, may exchange information via any communication network which may be one or more of a Local Area Network ("LAN"), a Metropolitan Area Network ("MAN"), a Wide Area Network ("WAN"), a proprietary network, a Public Switched Telephone Network ("PSTN"), a Wireless Application Protocol ("WAP") network, a Bluetooth network, a wireless LAN network, and/or an Internet Protocol ("IP") network such as the Internet, an intranet, or an extranet. Note that any devices described herein may communicate via one or more such communication networks.

The stateful, nonlinear embedding computer 150 may store information into and/or retrieve information from various data sources, such as the data source 110. The various data sources may be locally stored or reside remote from the stateful, nonlinear embedding computer 150 (which might also be associated with, for example, offline or online learning). Although a single stateful, nonlinear embedding computer 150 is shown in FIG. 1, any number of such devices may be included. Moreover, various devices described herein might be combined according to embodiments of the present invention. For example, in some embodiments, the stateful, nonlinear embedding computer 150 and one or more data sources 110 might comprise a single apparatus. The stateful, nonlinear embedding computer 150 functions may be performed by a constellation of networked apparatuses, in a distributed processing or cloud-based architecture.

A user may access the system 100 via one of the monitoring devices (*e.g.,* a Personal Computer ("PC"), tablet, smartphone, or remotely through a remote gateway connection) to view information about and/or manage information in accordance with any of the embodiments described herein. In some cases, an interactive graphical display interface may let a user define and/or adjust certain parameters (*e.g.,* time-series measurement properties or data about the cyber-physical system) and/or provide or receive automatically generated recommendations or results from the stateful, nonlinear embedding computer 150 (as well as other devices).

Note that nonlinear embedding may project a high-dimensional input to a lower-dimensional latent variable space (or hidden states) such that the system characteristics are maintained in low dimensional latent space (which inherently takes care of spatial dependency).

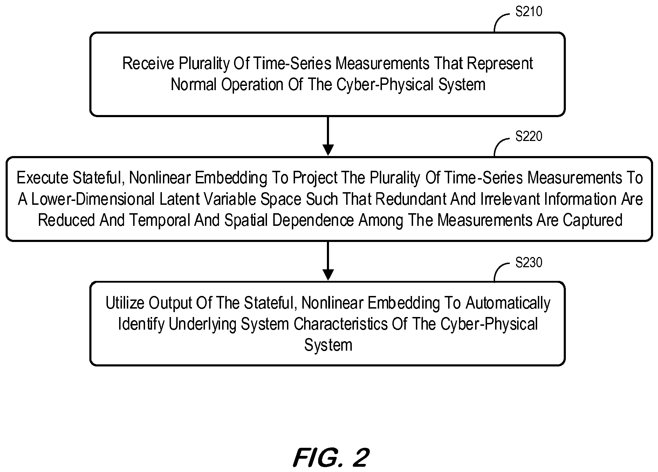

For example, FIG. 2 illustrates a method to abstract underlying characteristics of a cyber-physical system that might be performed by some or all of the elements of the system 100 described with respect to FIG. 1. The flow charts described herein do not imply a fixed order to the steps, and embodiments of the present invention may be practiced in any order that is practicable. Note that any of the methods described herein may be performed by hardware, software, or any combination of these approaches. For example, a computer-readable storage medium may store thereon instructions that when executed by a machine result in performance according to any of the embodiments described herein.

At S210, a "stateful," nonlinear embedding computer may receive, from a data source, a plurality of time-series measurements that represent normal operation of the cyber-physical system. As used herein, the term "stateful" may refer to a program or process designed to remember preceding events. According to some embodiments, the plurality of time-series measurement may be received in substantially real time during on-line operation of the cyber-physical system. At least one of the time-series measurements might be associated with, for example, a sensor monitoring node (*e.g.,* measuring an attribute associated with the cyber-physical system), an actuator monitoring node, and/or a control monitoring node.

At S220, stateful, nonlinear embedding may be executed to project the plurality of time-series measurements to a lower-dimensional latent variable space such that redundant and irrelevant information are reduced and temporal and spatial dependence among the measurements are captured. The stateful, nonlinear embedding might be associated with a deep neural network, an autoencoder, a variational autoencoder, a generative adversarial network, *etc.*

For example, the stateful, nonlinear embedding might augment a stateless, nonlinear embedding process by using a window of consecutive samples of the time-series measurements as a matrix input to the stateless, nonlinear embedding process. As another example, the stateful, nonlinear embedding might augment a stateless embedding process by using a first independent sample of the time-series measurements as a first vector input to the stateless embedding to receive a first output. The system may then use a second independent sample of the time-series measurements as a second vector input to the stateless embedding to receive a second output. Statistics of the first and second outputs may then be calculated with post-processing to obtain lower-dimensional latent variable space.

According to some embodiments, the stateful, nonlinear embedding is associated with a recurrent "autoencoder." As used herein, the term "autoencoder" might refer to, for example, an artificial neural network used for unsupervised learning of efficient codes to learn a representation (encoding) for a set of data (*e.g.,* to achieve dimensionality reduction). For example, the recurrent autoencoder might be implemented using a stateful "generative adversarial network." As used herein, the phrase "generative adversarial network may refer to, for example, a class of artificial intelligence algorithms used in unsupervised machine learning implemented by a system of two neural networks contesting with each other in a zero-sum game framework. The stateful generative adversarial network could include, for example, a generator (*e.g.,* having a recurrent neural network encoder and a recurrent neural network decoder) and a discriminator with a deep network. According to some embodiments, the generator is further associated with long short-term memory. Many of these techniques, in their original form, were not designed for dynamic system applications (that is, they are "stateless").

At S230, the output of the stateful, nonlinear embedding may be utilized to automatically identify underlying system characteristics of the cyber-physical system. The identified underlying system characteristics might then be used, for example, to create a decision boundary for cyber-attack detection, fault detection, abnormality localization, abnormality neutralization, *etc.*

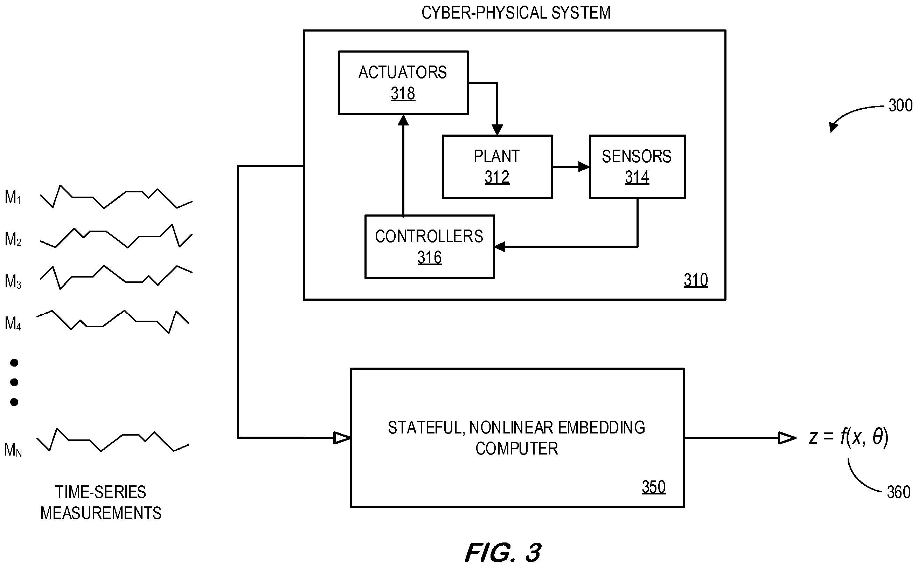

FIG. 3 is an overall architecture 300 of a system according to some embodiments. As before, a stateful, nonlinear embedding computer 350 may receive a time-series of measurements ($M_1$ through $M_N$). The time-series of measurements might be received, for example, a cyber-physical system 310. The cyber-physical system 310 might include a plant 312 (*e.g.,* associated with an industrial asset) that provides information to controllers 316 via sensors 314. The controllers 316 may operator actuators 318 that send data to the plant 312. By analyzing the time-series measurements, the stateful, nonlinear embedding computer 350 may create a latent representation 360 (*e.g.,* a function such as $z = f(x, \theta)$ or the like).

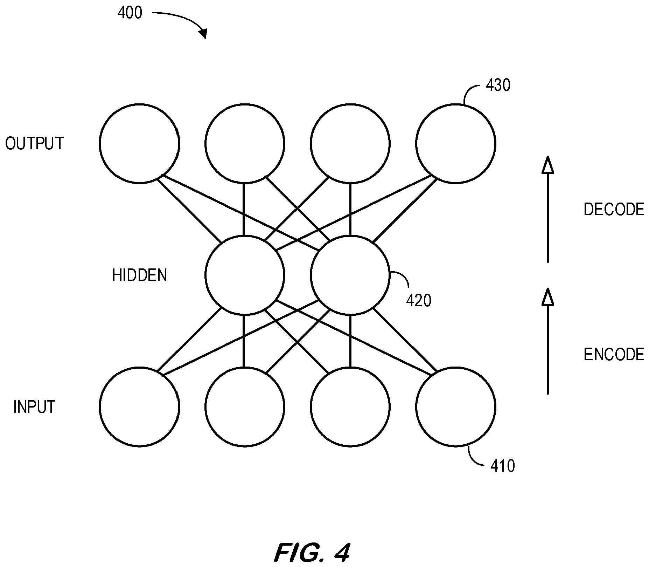

The stateful, nonlinear embedding computer 350 might implement, for example, an autoencoder to generate the latent representation 360. FIG. 4 illustrates layers of an autoencoder algorithm 400 in accordance with some embodiments. In particular, an encode process turns raw inputs 410 (*e.g.,* time-series measurements) into hidden layer 420 values. A decode process turns the hidden layer 420 values into output 430 (*e.g.,* the latent representation). Note that the number of hidden nodes can be specified and correspond to number of features to be learned. According to some embodiments, an autoencoder may be constructed as an optimization problem. For example, the error function, mean-squared error to minimize and find *W, b,* and *d'* may be performed as follows:

$$min \quad E(W, b, d') = min_{W,b,d'} \Sigma \sum_{j=1}^{p} \left\| x_j - g_\theta \left( f_\theta \left( x_j \right) \right) \right\|^2$$

where $x_j$ corresponds to samples of data and $P$ is equal to the number of samples.

Note that an autoencoder implementation may use the cross entropy error function instead of mean squared error. Moreover, an expected value may be required when using cross entropy:

$$minE(W, b, d') = min_{W,b,d'} E[L(x, z)]$$

where $L(x, z)$ is the cross-entropy loss $L(x, z)$ shown above.

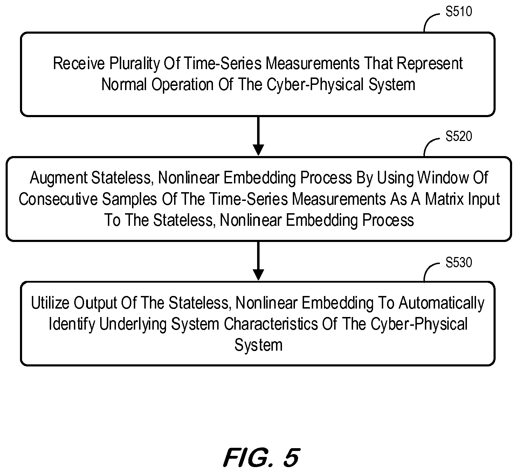

Broadly speaking, there may be two categories of strategies to achieve stateful embedding. The first one is to augment existing stateless embedding to make it stateful. For example, instead of taking an independent sample (an input vector) as the input to the stateless embedding, a system might take a window of consecutive samples (a matrix) as the input to the embedding, enabling the resultant embedding to be temporal dependent. For example, FIG. 5 is a method of providing stateful embedding according to some embodiments. At S510, a plurality of time-series measurements that represent normal operation of the cyber-physical system may be received from a data source.

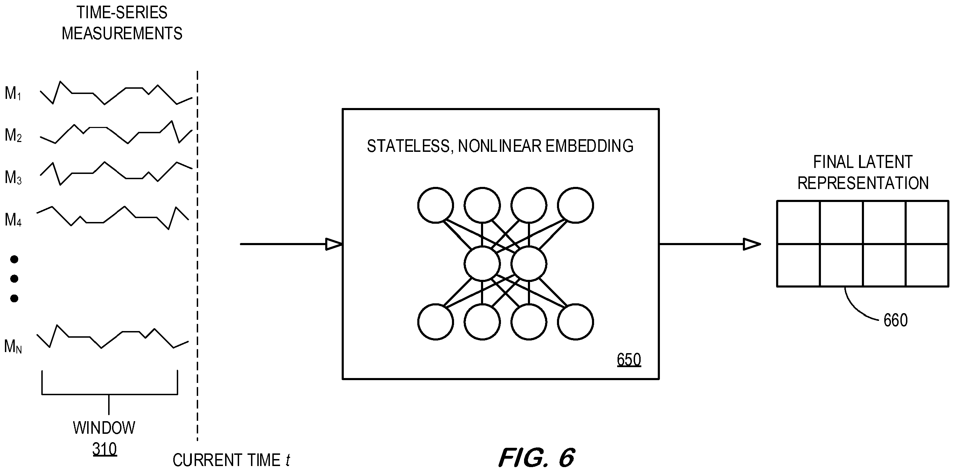

At S520, a stateless, nonlinear embedding process may be augmented by using a window of consecutive samples of the time-series measurements as a matrix input. For example, FIG. 6 illustrates a system 600 to augment stateless, nonlinear embedding using a window of inputs in accordance with some embodiments. A window 310 of time-series measurements (*e.g.,* from a prior time through current time $t$) is provided to stateless, nonlinear embedding 650 to create a final latent representation output 660. As a result, the system 600 may achieve stateful, nonlinear embedding such that redundant and irrelevant information are reduced and temporal and spatial dependence among the measurements are captured. Referring again to FIG. 5, at S530 the output may be utilized to automatically identify underlying system characteristics of the cyber-physical system.

This is the simplest strategy to make stateless embedding to be stateful. Note that a Denoising Auto-Encoder ("DAE"), a variant of autoencoding, maybe used as the stateless, nonlinear embedding algorithm to extract salient features for anomaly detection applications. However, this strategy has several drawbacks. One of them is that it increases the number of input elements to the embedding algorithm, which results in a more complex network structure and makes the network learning more difficult. For example, given an original input comprising a 20-element vector and a window size of 50 samples, the required input would have 1000 (20 * 50) elements.

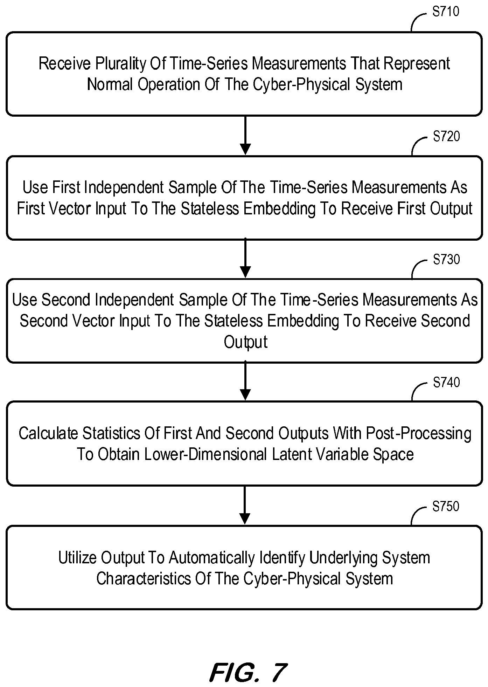

To address issue of increased input size, instead of taking a window of samples as the input to the stateless embedding algorithm, a system may take an independent sample as the input, which keeps the network structure unchanged. The system may then post-process the outputs of the stateless embedding to multiple consecutive inputs. Specifically, the system may obtain the latent representation or hidden states by calculating statistics of a window of stateless embedding outputs. For example, FIG. 7 is a method of providing stateful embedding using post-processing according to some embodiments. At S710, a plurality of time-series measurements that represent normal operation of the cyber-physical system may be received from a data source.

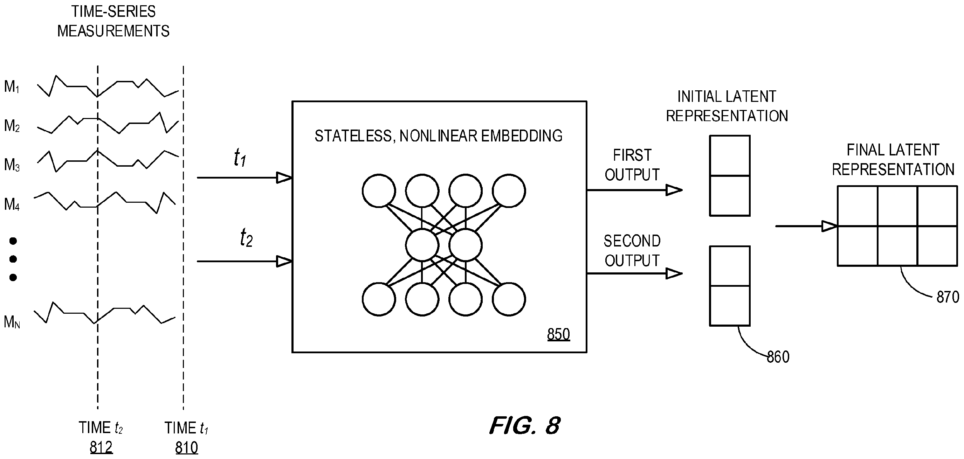

At S720, stateful, nonlinear embedding may be achieved by using a first independent sample of the time-series measurements as a first vector input to receive a first output. At S730, the system may use a second independent sample of the time-series measurements as a second vector input to receive a second output. Statistics of the first and second outputs may be calculated with post-processing at S740 to obtain lower-dimensional latent variable space. For example, FIG. 8 illustrates a system 800 to augment stateless, nonlinear embedding using multiple independent inputs in accordance with some embodiments. Independent samples 810, 812 of time-series measurements (*e.g.,* from a first time $t_1$ and a second time $t_2$) are provided to stateless, nonlinear embedding 850 to create initial latent representation outputs 860. These outputs 860 may be used to calculate statistics with post-processing to create a final latent representation 870. As a result, the system 800 may achieve stateful, nonlinear embedding such that redundant and irrelevant information are reduced and temporal and spatial dependence among the measurements are captured. Referring again to FIG. 7, at S750 the output may be utilized to automatically identify underlying system characteristics of the cyber-physical system. Note that another way to address the issue of increased input size may be calculate a small number of features out of a window of consecutive samples.

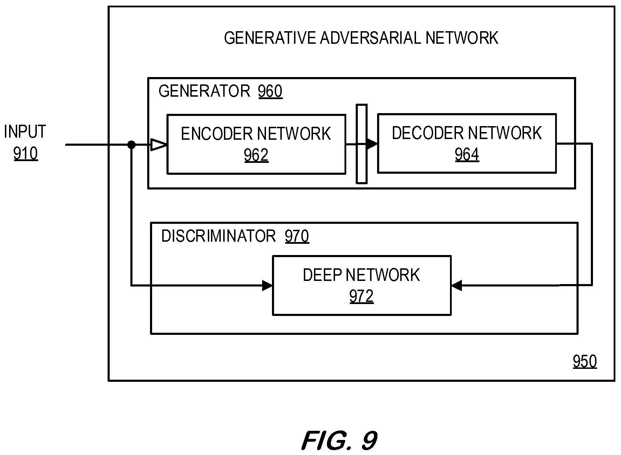

Another category of strategies to achieve stateful embedding is to directly construct a stateful embedding algorithm or network, such as a recurrent autoencoder. According to some embodiments, a stateful generative adversarial network may be provided. Note that generative adversarial networks are a relatively new type of generative models that have been recently developed. As illustrated in FIG. 9, a generative adversarial network 950 may include a generator 960 and a discriminator 970. An input 910 may be received by an encoder network 962 of the generator 960 and then be processed by a decoder network 964. The output of the decoder network 962 is provided to a deep network 972 in the discriminator 970.

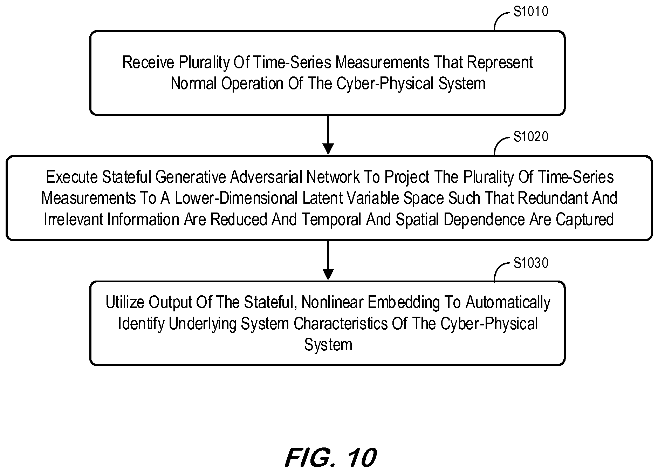

In such a stateless GAN 950, the generator 960 and discriminator 720 networks are feed-forward neural networks. To make a GAN stateful, embodiments may utilize recurrent types of networks, e.g. recurrent neural networks and/or long short-term memory for a generator network. FIG. 10 is a method of providing a stateful generative adversarial network according to some embodiments.

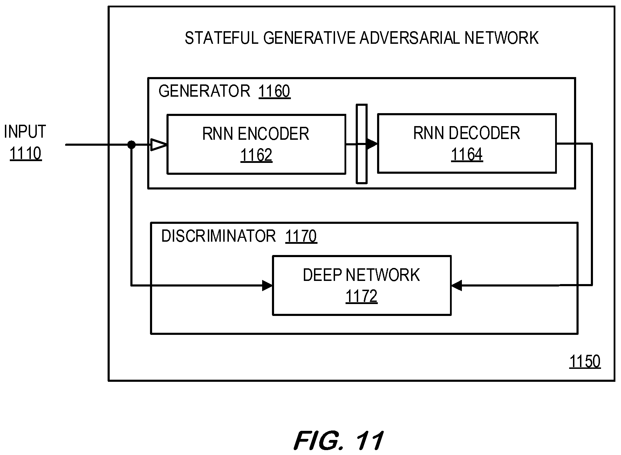

At S 1010, a plurality of time-series measurements that represent normal operation of the cyber-physical system may be received. At S1020, stateful, nonlinear embedding may be achieved with a recurrent autoencoder, such as a stateful generative adversarial network. For example, FIG. 11 is a stateful generative adversarial network 1150 according to some embodiments. The generative adversarial network 1150 includes a generator 1160 and a discriminator 1170. An input 1110 may be received by a Recurrent Neural Network ("RNN") encoder 1162 of the generator 1160 and then be processed by an RNN decoder 1164. The output of the RNN decoder 1164 is provided to a deep network 1172 in the discriminator 1170. According to some embodiments, elements of the generator may utilize long short-term memory. In this way, stateful, nonlinear embedding may be executed to project the plurality of time-series measurements to a lower-dimensional latent variable space such that redundant and irrelevant information are reduced and temporal and spatial dependence among the measurements are captured. Referring again to FIG. 10, at S1030 an output may be utilized to automatically identify underlying system characteristics of the cyber-physical system.

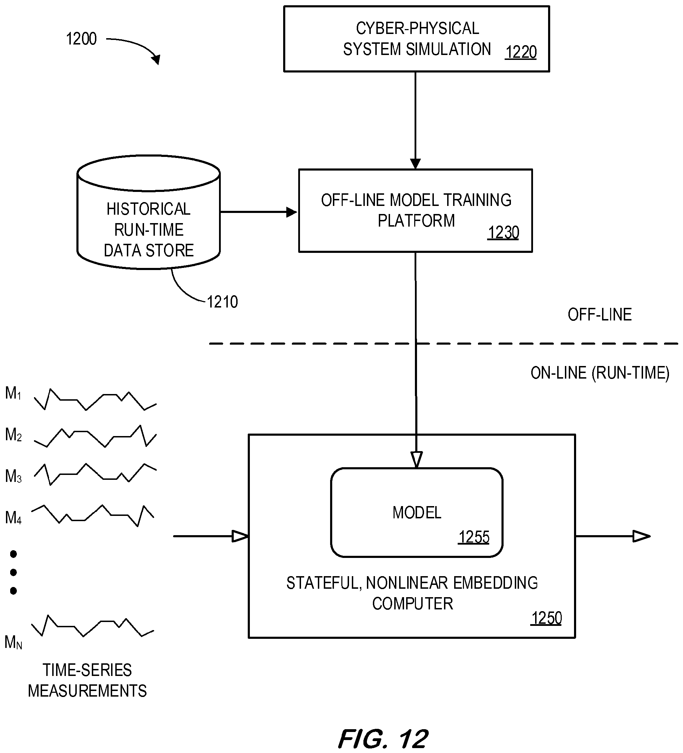

Appropriate stateful, nonlinear embedding for a particular cyber-physical system may be achieved in a number of different ways. For example, FIG. 12 is a system 1200 that may create stateful, nonlinear embedding in accordance with some embodiments. As before, the system 1200 includes a stateful, nonlinear embedding computer 1250 that receives time-series measurements on-line during run-time (*e.g.,* while a cyber-physical system is running). The stateful, nonlinear embedding computer 1250 may execute a model 1255 that was previous created off-line (*e.g.,* before the current operation of the cyber-physical system). According to some embodiments, the model may be created by an off-line model training platform 1230 based on, for example, information from a historical run-time data store 1210 (*e.g.,* data collected over several months of normal operation of the cyber-physical asset) and/or information from a cyber-physical system simulation (*e.g.,* a high-fidelity physics model that simulates operation of the cyber-physical system).

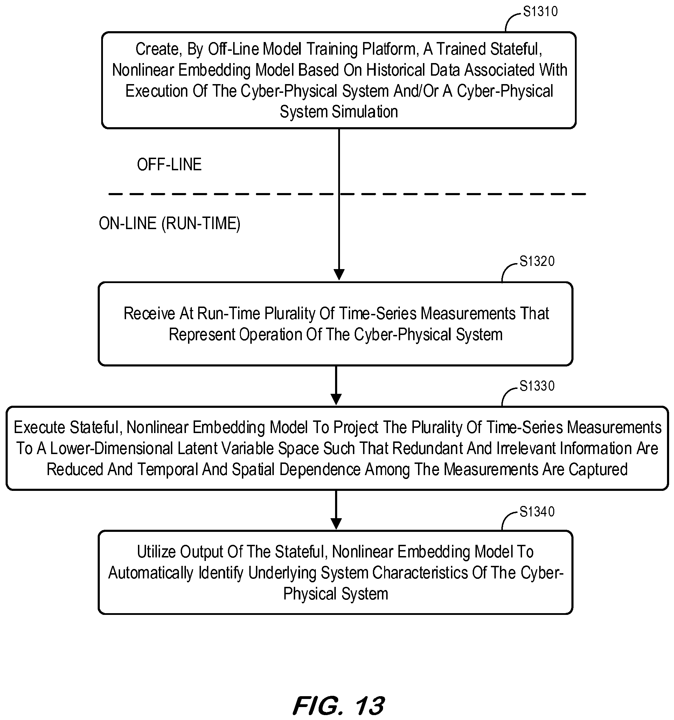

FIG. 13 is a method to create stateful, nonlinear embedding in accordance with some embodiments. At S1310, an off-line model training platform may create a trained stateful nonlinear embedding model. For example, data might be recorded during normal operation of a gas turbine over a period of several month (*e.g.,* and the recorded data might be stored in a historical data store). This information may then be used offline to train a stateful, nonlinear embedding model. According to some embodiments, a high-fidelity simulation may be used to generate data that can be used to train the model (*e.g.,* instead of or in addition to actual historical data). Later, during on-line run-time, time-series measurements that represent operation of the cyber -physical system may be received at S 1320. The stateful, nonlinear embedding model may then be executed at S1330 (*e.g.,* to project the measurements to a lower dimensional latent variable space such that redundant and/or irrelevant information may be reduced while temporal and/or spatial dependence among the measurements are captured). At S1340, the system may utilize the output of the stateful, nonlinear embedding model to automatically identify underlying characteristics of the cyber-physical system.

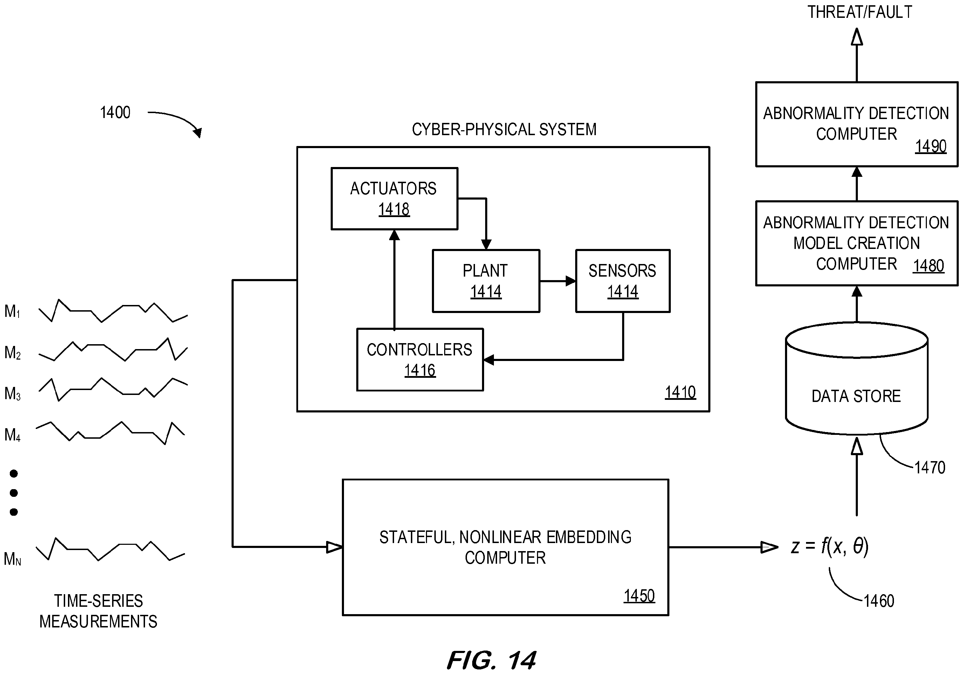

Note that embodiments described herein may provide advantages such as: a novel method for abstracting cyber-physical system characteristics; handling both spatial and temporal dependences of the underlying system; and a generic method with a wide range of applications. For example, some embodiments might be associated with cyber-physical security techniques. FIG. 14 is abnormality detection system 1400 for an industrial asset in accordance with some embodiments. As before, a stateful, nonlinear embedding computer 1450 may receive a time-series of measurements ($M_1$ through $M_N$). The time-series of measurements might be received, for example, a cyber-physical system 1410. The cyber-physical system 1410 might include a plant 1412 (*e.g.,* associated with an industrial asset) that provides information to controllers 1416 via sensors 1414. The controllers 1416 may operator actuators 1418 that send data to the plant 1412. By analyzing the time-series measurements, the stateful, nonlinear embedding computer 1450 may create a latent representation 1460 (*e.g.,* a function such as $z = f(x, \theta)$ or the like). The latent representation 1460 may be stored in a data store 1470 accessed by an abnormality detection model creation computer 1480. The abnormality detection model creation computer 1480 may create feature vectors in feature space and generate a decision boundary separating normal operation of the system 1410 from abnormal operation (*e.g.,* during a fault or cyber-threat). An abnormality detection computer 1490 might then use the decision boundary (along with current measurements from the system 1410 converted into feature space during on-line operation) for cyber-attack detection, fault detection, abnormality localization, abnormality neutralization, *etc.*

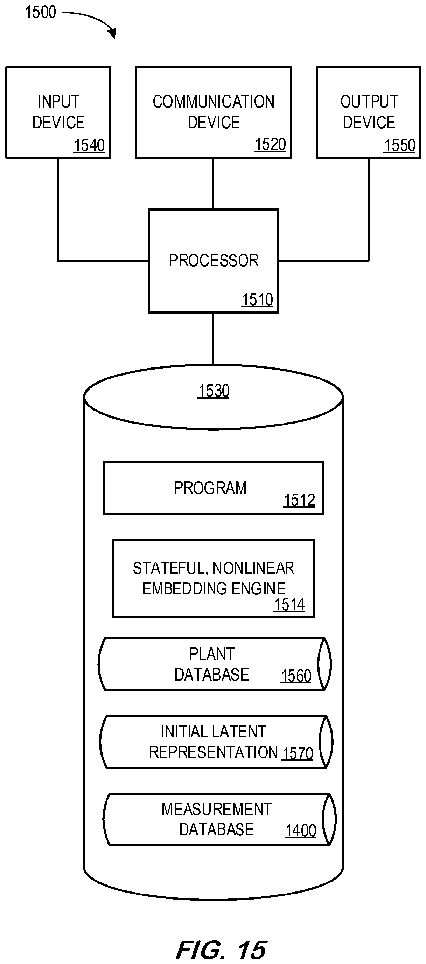

The embodiments described herein may be implemented using any number of different hardware configurations. For example, FIG. 15 is a block diagram of a stateful, nonlinear embedding platform 1500 that may be, for example, associated with the system 100 of FIG. 1. The stateful, nonlinear embedding platform 1500 comprises a processor 1510, such as one or more commercially available Central Processing Units ("CPUs") in the form of one-chip microprocessors, coupled to a communication device 1520 configured to communicate via a communication network (not shown in FIG. 15). The communication device 1520 may be used to communicate, for example, with one or more remote monitoring nodes, user platforms, *etc.* The stateful, nonlinear embedding platform 1500 further includes an input device 1540 (*e.g.,* a computer mouse and/or keyboard to input sensor configuration data, *etc.)* and an output device 1550 (*e.g.,* a computer monitor to render a display, provide alerts, transmit recommendations, and/or create reports). According to some embodiments, a mobile device, monitoring physical system, and/or PC may be used to exchange information with the stateful, nonlinear embedding platform 1500.

The processor 1510 also communicates with a storage device 1530. The storage device 1530 may comprise any appropriate information storage device, including combinations of magnetic storage devices (*e.g.,* a hard disk drive), optical storage devices, mobile telephones, and/or semiconductor memory devices. The storage device 1530 stores a program 1512 and/or a stateful, non-linear embedding engine 1514 for controlling the processor 1510. The processor 1510 performs instructions of the programs 1512, 1514, and thereby operates in accordance with any of the embodiments described herein. For example, the processor 1510 may receive a plurality of time-series measurements that represent normal operation of a cyber-physical system (*e.g.,* in substantially real-time during online operation of the cyber-physical system). The processor 1510 may then execute stateful, nonlinear embedding to project the plurality of time-series measurements to a lower-dimensional latent variable space. In this way, redundant and irrelevant information may be reduced, and temporal and spatial dependence among the measurements may be captured. The output of the stateful, nonlinear embedding may be utilized, for example, by the processor 1510 to automatically identify underlying system characteristics of the cyber-physical system.

The programs 1512, 1514 may be stored in a compressed, uncompiled and/or encrypted format. The programs 1512, 1514 may furthermore include other program elements, such as an operating system, clipboard application, a database management system, and/or device drivers used by the processor 1510 to interface with peripheral devices.

As used herein, information may be "received" by or "transmitted" to, for example: (i) the stateful, nonlinear embedding platform 1500 from another device; or (ii) a software application or module within the stateful, nonlinear embedding platform 1500 from another software application, module, or any other source.

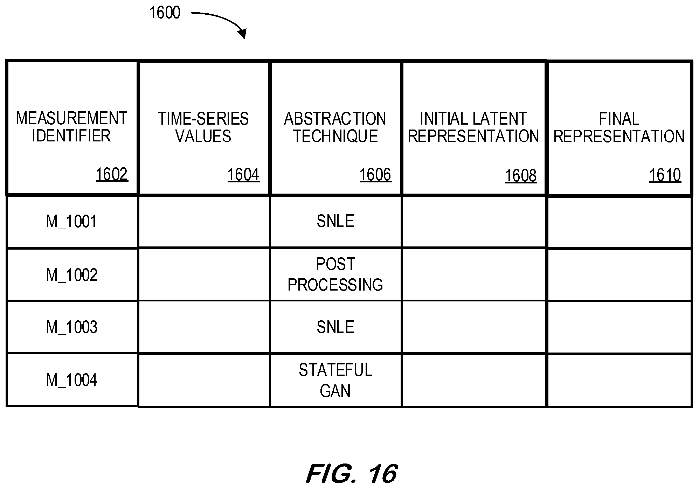

In some embodiments (such as the one shown in FIG. 15), the storage device 1530 further stores a plant database 1560 (*e.g.,* describing monitoring nodes of an industrial asset), an initial latent representation 1570, and/or a measurement database 1600. An example of a database that may be used in connection with the stateful, nonlinear embedding platform 1500 will now be described in detail with respect to FIG. 16. Note that the database described herein is only one example, and additional and/or different information may be stored therein. Moreover, various databases might be split or combined in accordance with any of the embodiments described herein.

Referring to FIG. 16, a table is shown that represents the measurement database 1600 that may be stored at the stateful, nonlinear embedding platform 1500 according to some embodiments. The table may include, for example, entries identifying monitoring nodes (sensor nodes and other types of nodes) associated with a cyber-physical system. The table may also define fields 1602, 1604, 1606, 1608, 1610 for each of the entries. The fields 1602, 1604, 1606, 1608, 1610 may, according to some embodiments, specify: a measurement identifier 1602, a time series of values 1604, an abstraction technique 1606, an initial latent represents 1608, and a final representation 1610. The measurement database 1600 may be created and updated, for example, when a new physical system is monitored or modeled and/or on-line operation values are received from monitoring nodes.

The measurement identifier 1602 may be, for example, a unique alphanumeric code identifying a node to be monitored (*e.g.,* associated with a sensor). The time series of values 1604 may represent, for example, normal and/or abnormal data from a sensor or other monitoring node. The abstraction technique might indicate, for example, how characteristics of the system are being identified, such as by stateful, nonlinear estimation, post processing, a stateful generative adversarial network, *etc.* The initial latent representation 1608 may be used, in some approaches, to calculate the final representation 1610.

The following illustrates various additional embodiments of the invention. These do not constitute a definition of all possible embodiments, and those skilled in the art will understand that the present invention is applicable to many other embodiments. Further, although the following embodiments are briefly described for clarity, those skilled in the art will understand how to make any changes, if necessary, to the above-described apparatus and methods to accommodate these and other embodiments and applications.

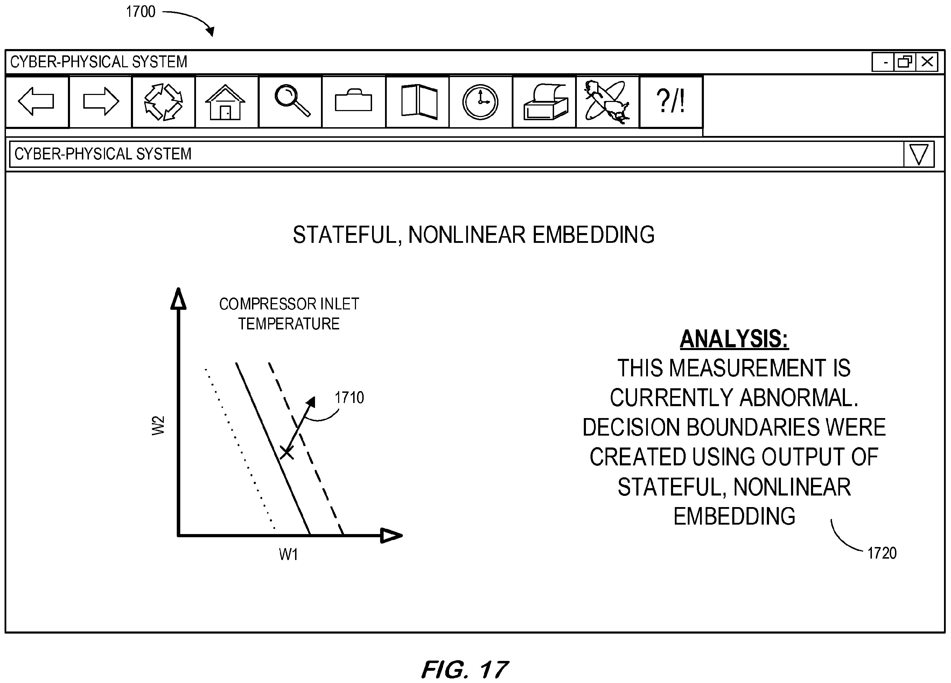

Although specific hardware and data configurations have been described herein, note that any number of other configurations may be provided in accordance with embodiments of the present invention (*e.g.,* some of the information associated with the databases described herein may be combined or stored in external systems). For example, although some embodiments are focused on industrial assets such as gas turbine generators, any of the embodiments described herein could be applied to other types of cyber-physical systems, such as dams, the power grid, military devices, *etc.* Moreover, note that some embodiments may be associated with a display of cyber-physical system data to an operator. For example, FIG. 17 illustrates an interactive Graphical User Interface ("GUI") display 1700 that might include cyber-physical system information (*e.g.,* including a feature vector 1710 and decision boundaries) along with an automatically generated analysis 1720 of the data.

The present invention has been described in terms of several embodiments solely for the purpose of illustration. Persons skilled in the art will recognize from this description that the invention is not limited to the embodiments described, but may be practiced with modifications and alterations limited only by the scope of the appended claims.

**Claims**

1. A platform associated with a cyber-physical system (310) associated with an industrial asset, comprising:

   a data source (110) for a plurality of time-series measurements that represent normal operation of the cyber-physical system (310);
   wherein at least one of the time-series measurements are associated with at least one of: (i) a sensor monitoring node, (ii) an actuator monitoring node, and (iii) a control monitoring node;
   a stateful, nonlinear embedding computer (350, 1250), coupled to the data source (110), performing the following steps:

   (i) receive the plurality of time-series measurements,
   (ii) execute stateful, nonlinear embedding to project the plurality of time-series measurements to a lower-dimensional latent variable space such that redundant and irrelevant information are reduced and temporal and spatial dependence among the measurements are captured, wherein the stateful, nonlinear embedding comprises augmenting a stateless, nonlinear embedding process by using a window (310) of consecutive samples of the time-series measurements as a matrix input to the stateless, nonlinear embedding process. and
   (iii) utilize output of the stateful, nonlinear embedding to automatically identify underlying system characteristics of the cyber-physical system (310).

2. The platform of claim 1, wherein the stateful, nonlinear embedding is associated with a model (1255) created before run-time by an off-line model training platform (1230) based on at least one of: (i) historical data (1210) associated with execution of the cyber-physical system (310) under normal condition, and (ii) a cyber-physical system simulation (1220) under normal condition.

3. The platform of claim 1, wherein the plurality of time-series measurements are received in substantially real time during on-line operation of the cyber-physical system (310).

4. The platform of claim 1, wherein the stateful, nonlinear embedding is associated with at least one of: (i) a deep neural network, (ii) an autoencoder, (iii) a variational autoencoder, and (iv) a generative adversarial network (950).

5. The platform of claim 1, wherein the stateful, nonlinear embedding comprises augmenting a stateless embedding process by: using a first independent sample of the time-series measurements as a first vector input to the stateless embedding to receive a first output; using a second independent sample of the time-series measurements as a second vector input to the stateless embedding to receive a second output; and calculating statistics of the first and second outputs with post-processing to obtain lower-dimensional latent variable space.

6. The platform of claim 1, wherein the stateful, nonlinear embedding is associated with a recurrent autoencoder.

7. The platform of claim 6, wherein the recurrent autoencoder comprises a stateful generative adversarial network (1150).

8. The platform of claim 7, wherein the stateful generative adversarial network (1150) comprises:

   a generator (1160), including:

   a recurrent neural network encoder (1162), and
   a recurrent neural network decoder (1164); and

   a discriminator (1170) having a deep network (1172).

**Patentansprüche**

1. Plattform, die mit einem cyberphysikalischen System (310) verbunden ist, das mit einer industriellen Anlage verbunden ist, umfassend:

eine Datenquelle (110) für eine Vielzahl von Zeitreihen-Messungen, die einen normalen Betrieb des cyberphysikalischen Systems (310) darstellen;
wobei mindestens eine der Zeitreihen-Messungen mit mindestens einem der folgenden Elemente verbunden ist: (i) ein Sensor-Überwachungsknoten, (ii) ein Stellglied-Überwachungsknoten und (iii) ein Steuerungs-Überwachungsknoten;
ein zustandsbehafteter, nichtlinearer Einbettungscomputer (350, 1250), der mit der Datenquelle (110) gekoppelt ist und die folgenden Schritte durchführt:

(i) Empfangen der Vielzahl von Zeitreihen-Messungen,
(ii) Ausführen einer zustandsbehafteten, nichtlinearen Einbettung, um die Vielzahl von Zeitreihen-Messungen auf einen niedriger-dimensionalen latenten Variablenraum zu projizieren, sodass redundante und irrelevante Informationen reduziert und die zeitliche und räumliche Abhängigkeit zwischen den Messungen erfasst wird, wobei die zustandsbehaftete, nichtlineare Einbettung das Erweitern eines zustandslosen, nichtlinearen Einbettungsvorgangs umfasst, indem ein Fenster (310) von aufeinanderfolgenden Samples der Zeitreihen-Messungen als Matrixeingabe für den zustandslosen, nichtlinearen Einbettungsvorgang verwendet wird, und
(iii) Nutzen der Ausgabe der zustandsbehafteten, nichtlinearen Einbettung, um automatisch die zugrundeliegenden Systemeigenschaften des cyberphysikalischen Systems (310) zu identifizieren.

2. Plattform nach Anspruch 1, wobei die zustandsbehaftete, nichtlineare Einbettung mit einem Modell (1255) verbunden ist, das vor der Laufzeit von einer Offline-Modelltrainingsplattform (1230) auf Grundlage von mindestens einem der folgenden Elemente erstellt wurde: (i) historische Daten (1210), die mit der Ausführung des cyberphysikalischen Systems (310) unter normalen Bedingungen verbunden sind, und (ii) eine Simulation (1220) des cyberphysikalischen Systems unter normalen Bedingungen.

3. Plattform nach Anspruch 1, wobei die Vielzahl von Zeitreihen-Messungen im Wesentlichen in Echtzeit während des Online-Betriebs des cyberphysikalischen Systems (310) empfangen wird.

4. Plattform nach Anspruch 1, wobei die zustandsbehaftete, nichtlineare Einbettung mit mindestens einem der folgenden Elemente verbunden ist: (i) ein tiefes neuronales Netz, (ii) ein Autoencoder, (iii) ein variationaler Autoencoder und (iv) ein generatives adversariales Netz (950).

5. Plattform nach Anspruch 1, wobei die zustandsbehaftete, nichtlineare Einbettung das Erweitern eines zustandslosen Einbettungsvorgangs umfasst, indem: ein erstes unabhängiges Sample der Zeitreihen-Messungen als eine erste Vektoreingabe zur zustandslosen Einbettung verwendet wird, um eine erste Ausgabe zu erhalten; ein zweites unabhängiges Sample der Zeitreihen-Messungen als eine zweite Vektoreingabe zur zustandslosen Einbettung verwendet wird, um eine zweite Ausgabe zu erhalten; und Statistiken der ersten und zweiten Ausgaben mit Nachbearbeitung berechnet werden, um einen niedriger-dimensionalen latenten Variablenraum zu erhalten.

6. Plattform nach Anspruch 1, wobei die zustandsbehaftete, nichtlineare Einbettung mit einem rekurrenten Autoencoder verbunden ist.

7. Plattform nach Anspruch 6, wobei der rekurrente Autoencoder ein zustandsbehaftetes generatives adversariales Netz (1150) umfasst.

8. Plattform nach Anspruch 7, wobei das zustandsbehaftete generative adversariale Netz (1150) umfasst:

einen Generator (1160), einschließlich:

einem rekurrenten neuronalen Netzencoder (1162) und
einem rekurrenten neuronalen Netzdecoder (1164); und

einen Diskriminator (1170) mit einem tiefen Netz (1172).

**Revendications**

1. Plateforme associée à un système cyberphysique (310) associé à un actif industriel, comprenant :

une source de données (110) permettant une pluralité de mesures de série temporelle qui représentent un fonctionnement normal du système cyberphysique (310) ;

au moins une des mesures de série temporelle étant associée à au moins un noeud parmi : (i) un noeud de surveillance de capteur, (ii) un noeud de surveillance d'actionneur et (iii) un noeud de surveillance de commande ;

un ordinateur d'intégration à état, non linéaire (350, 1250), couplé à la source de données (110) et réalisant les étapes suivantes :

(i) réception de la pluralité de mesures de série temporelle,

(ii) exécution d'une intégration à état, non linéaire pour projeter la pluralité de mesures de série temporelle dans un espace variable latent de moindre dimension, de sorte que des informations redondantes et inappropriées soient réduites et que la dépendance temporelle et spatiale parmi les mesures soit capturée, l'intégration à état, non linéaire comprenant l'augmentation d'un processus d'intégration sans état, non linéaire à l'aide d'une fenêtre (310) d'échantillons consécutifs des mesures de série temporelle sous forme d'entrée matricielle dans le processus sans état, non linéaire d'intégration et

(iii) utilisation de la sortie de l'intégration à état, non linéaire pour identifier automatiquement des caractéristiques sous-jacentes de système du système cyberphysique (310).

2. Plateforme selon la revendication 1, dans laquelle l'intégration à état, non linéaire est associée à un modèle (1255) créé avant le temps d'exécution par une plateforme d'entraînement de modèle hors ligne (1230) d'après : (i) des données historiques (1210) associées à l'exécution du système cyberphysique (310) en condition normale et/ou (ii) une simulation de système cyberphysique (1220) en condition normale.

3. Plateforme selon la revendication 1, dans laquelle la pluralité de mesures de série temporelle sont reçues sensiblement en temps réel lors du fonctionnement en ligne du système cyberphysique (310).

4. Plateforme selon la revendication 1, dans laquelle l'intégration à état, non linéaire est associée à au moins un élément parmi : (i) un réseau neuronal profond, (ii) un autocodeur, (iii) un autocodeur variationnel et/ou (iv) à un réseau antagoniste génératif (950).

5. Plateforme selon la revendication 1, dans laquelle l'intégration à état, non linéaire comprend l'augmentation d'un processus d'intégration sans état : au moyen d'un premier échantillon indépendant des mesures de série temporelle en tant que première entrée vectorielle dans l'intégration sans état pour recevoir une première sortie ; au moyen d'un second échantillon indépendant des mesures de série temporelle en tant que seconde entrée vectorielle dans l'intégration sans état pour recevoir une seconde sortie ; et par calcul de statistiques des première et seconde sorties avec post-traitement pour obtenir un espace variable latent de moindre dimension.

6. Plateforme selon la revendication 1, dans laquelle l'intégration à état, non linéaire est associée à un autocodeur récurrent.

7. Plateforme selon la revendication 6, dans laquelle l'autocodeur récurrent comprend un réseau antagoniste génératif (1150).

8. Plateforme selon la revendication 7, dans laquelle le réseau antagoniste génératif (1150) comprend :

un générateur (1160) comportant :

un codeur de réseau neuronal récurrent (1162) et
un décodeur de réseau neuronal récurrent (1164) ; et

un discriminateur (1170) doté d'un réseau profond (1172).

*FIG. 1*

S210

Receive Plurality Of Time-Series Measurements That Represent
Normal Operation Of The Cyber-Physical System

S220

Execute Stateful, Nonlinear Embedding To Project The Plurality Of Time-Series Measurements To
A Lower-Dimensional Latent Variable Space Such That Redundant And Irrelevant Information Are
Reduced And Temporal And Spatial Dependence Among The Measurements Are Captured

S230

Utilize Output Of The Stateful, Nonlinear Embedding To Automatically
Identify Underlying System Characteristics Of The Cyber-Physical
System

*FIG. 2*

*FIG. 3*

**FIG. 4**

S510

Receive Plurality Of Time-Series Measurements That Represent Normal Operation Of The Cyber-Physical System

S520

Augment Stateless, Nonlinear Embedding Process By Using Window Of Consecutive Samples Of The Time-Series Measurements As A Matrix Input To The Stateless, Nonlinear Embedding Process

S530

Utilize Output Of The Stateless, Nonlinear Embedding To Automatically Identify Underlying System Characteristics Of The Cyber-Physical System

*FIG. 5*

TIME-SERIES
MEASUREMENTS

$M_1$

$M_2$

$M_3$

$M_4$

$M_N$

WINDOW
310

CURRENT TIME $t$

STATELESS, NONLINEAR EMBEDDING

650

FINAL LATENT
REPRESENTATION

660

**FIG. 6**

S710

Receive Plurality Of Time-Series Measurements That Represent Normal Operation Of The Cyber-Physical System

S720

Use First Independent Sample Of The Time-Series Measurements As First Vector Input To The Stateless Embedding To Receive First Output

S730

Use Second Independent Sample Of The Time-Series Measurements As Second Vector Input To The Stateless Embedding To Receive Second Output

S740

Calculate Statistics Of First And Second Outputs With Post-Processing To Obtain Lower-Dimensional Latent Variable Space

S750

Utilize Output To Automatically Identify Underlying System Characteristics Of The Cyber-Physical System

*FIG. 7*

FIG. 8

GENERATIVE ADVERSARIAL NETWORK

GENERATOR 960

INPUT 910

ENCODER NETWORK 962

DECODER NETWORK 964

DISCRIMINATOR 970

DEEP NETWORK 972

950

*FIG. 9*

EP 3 515 041 B1

```
                                                              ┌─ S1010
┌─────────────────────────────────────────────────────────────┐
│                                                               │
│      Receive Plurality Of Time-Series Measurements That Represent │
│         Normal Operation Of The Cyber-Physical System         │
│                                                               │
└─────────────────────────────────────────────────────────────┘
                                │
                                ▼
                                                              ┌─ S1020
┌─────────────────────────────────────────────────────────────┐
│  Execute Stateful Generative Adversarial Network To Project The Plurality Of Time-Series │
│  Measurements To A Lower-Dimensional Latent Variable Space Such That Redundant And │
│  Irrelevant Information Are Reduced And Temporal And Spatial Dependence Are Captured │
└─────────────────────────────────────────────────────────────┘
                                │
                                ▼
                                                              ┌─ S1030
┌─────────────────────────────────────────────────────────────┐
│     Utilize Output Of The Stateful, Nonlinear Embedding To Automatically │
│     Identify Underlying System Characteristics Of The Cyber-Physical │
│                            System                             │
└─────────────────────────────────────────────────────────────┘
```

*FIG. 10*

STATEFUL GENERATIVE ADVERSARIAL NETWORK

GENERATOR 1160

INPUT
1110

RNN ENCODER
1162

RNN DECODER
1164

DISCRIMINATOR 1170

DEEP NETWORK
1172

1150

FIG. 11

EP 3 515 041 B1

1200

CYBER-PHYSICAL
SYSTEM SIMULATION  1220

HISTORICAL
RUN-TIME
DATA STORE

1210

OFF-LINE MODEL TRAINING
PLATFORM
1230

OFF-LINE

ON-LINE (RUN-TIME)

$M_1$

$M_2$

$M_3$

$M_4$

$M_N$

TIME-SERIES
MEASUREMENTS

MODEL
1255

STATEFUL, NONLINEAR EMBEDDING
COMPUTER
1250

*FIG. 12*

S1310

Create, By Off-Line Model Training Platform, A Trained Stateful, Nonlinear Embedding Model Based On Historical Data Associated With Execution Of The Cyber-Physical System And/Or A Cyber-Physical System Simulation

OFF-LINE

ON-LINE (RUN-TIME)

S1320

Receive At Run-Time Plurality Of Time-Series Measurements That Represent Operation Of The Cyber-Physical System

S1330

Execute Stateful, Nonlinear Embedding Model To Project The Plurality Of Time-Series Measurements To A Lower-Dimensional Latent Variable Space Such That Redundant And Irrelevant Information Are Reduced And Temporal And Spatial Dependence Among The Measurements Are Captured

S1340

Utilize Output Of The Stateful, Nonlinear Embedding Model To Automatically Identify Underlying System Characteristics Of The Cyber-Physical System

## FIG. 13

FIG. 14

1500

| INPUT DEVICE 1540 | COMMUNICATION DEVICE 1520 | OUTPUT DEVICE 1550 |

PROCESSOR

1510

1530

| PROGRAM 1512 |

| STATEFUL, NONLINEAR EMBEDDING ENGINE 1514 |

| PLANT DATABASE 1560 |

| INITIAL LATENT REPRESENTATION 1570 |

| MEASUREMENT DATABASE 1400 |

*FIG. 15*

1600 →

| MEASUREMENT IDENTIFIER 1602 | TIME-SERIES VALUES 1604 | ABSTRACTION TECHNIQUE 1606 | INITIAL LATENT REPRESENTATION 1608 | FINAL REPRESENTATION 1610 |
|---|---|---|---|---|
| M_1001 | | SNLE | | |
| M_1002 | | POST PROCESSING | | |
| M_1003 | | SNLE | | |
| M_1004 | | STATEFUL GAN | | |

*FIG. 16*

EP 3 515 041 B1

*FIG. 17*

EP 3 515 041 B1

**REFERENCES CITED IN THE DESCRIPTION**

**Patent documents cited in the description**

- US 2017167993 A1, ELDARDIRY HODA M A

**Non-patent literature cited in the description**

- A Multimodal Anomaly Detector for Robot-Assisted Feeding Using an LSTM-based Variational Autoencoder. **DAEHYUNG PARK et al.** ARXIV.ORG. CORNELL UNIVERSITY LIBRARY, 02 November 2017
- **JINWON AN et al.** Variational Autoencoder based Anomaly Detection using Reconstruction Probability. *PROGRESS IN BIOMEDICAL OPTICS AND IMAGING,* 27 December 2015, 1-18, 6
- **YIFAN GUO et al.** Multidimensional Time Series Anomaly Detection: A GRU-based Gaussian Mixture Variational Autoencoder Approach. *PROCEEDINGS OF MACHINE LEARNING RESEARCH,* 14 November 2018, vol. 95, 97-112
- **WEIZHONG YAN et al.** *On Accurate and Reliable Anomaly Detection for Gas Turbine Combustors: A Deep Learning Approach,* 31 October 2015